(19) Europäisches Patentamt
European Patent Office
Office européen des brevets

(11) **EP 4 151 352 A1**

(12) **EUROPEAN PATENT APPLICATION**
published in accordance with Art. 153(4) EPC

(43) Date of publication:
**22.03.2023 Bulletin 2023/12**

(21) Application number: **20934112.2**

(22) Date of filing: **27.06.2020**

(51) International Patent Classification (IPC):
**B23K 11/24** *(2006.01)*          **B23K 11/11** *(2006.01)*

(52) Cooperative Patent Classification (CPC):
**B23K 11/11; B23K 11/24**

(86) International application number:
**PCT/JP2020/025421**

(87) International publication number:
**WO 2021/220522 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.05.2020 JP 2020080906**

(71) Applicant: **Koyo Giken Inc.
Kanagawa 2520132 (JP)**

(72) Inventors:
• **ENDO, Yoshikatu
Sagamihara-shi, Kanagawa 252-0132 (JP)**
• **KAI, Kouji
Sagamihara-shi, Kanagawa 252-0132 (JP)**
• **HASHIDA, Shuhei
Sagamihara-shi, Kanagawa 252-0132 (JP)**
• **KAI, Mitoshi
Sagamihara-shi, Kanagawa 252-0132 (JP)**

(74) Representative: **Hoffmann Eitle
Patent- und Rechtsanwälte PartmbB
Arabellastraße 30
81925 München (DE)**

(54) **RESISTANCE WELDING DEVICE, COMPUTER PROGRAM FOR CONTROL, AND RECORDING MEDIUM**

(57)     [Problem]
To small a capacity of a database for obtaining a welding condition.
[Solution]
The first database 38 outputs the welding current 44, the energization time 46, and the pressing force 48, etc. corresponding to the basic elements 32 including the kind of material, the thickness of material and the type of electrode. The second database 40 outputs the trend formula 52 used for correcting the output from the first database 38 depending on the property of the additional element 34. The element selecting device 36 selects an element and performs searching in the databases 38 and 40. The operating device 42 executes a correction operation process for applying the search result in the second database 40 to the search result in the first database 38, and outputs the welding condition 50 including the welding current 44, the energization time 46, and the pressing force 48.

FIG1

**Description**

[TECHNICAL FIELD of THE INVENTION]

The present invention relates to a resistance welding device capable of optimizing a welding condition with taking into account of various elements.

[BACKGROUND OF THE INVENTION]

In a conventional resistance welding device, materials to be welded are overlapped, a portion to be welded is sandwiched between electrodes, a pressing force is applied to the portion, and a welding electric current is flowed between the electrodes. As the electrode, for example, a table-type electrode, a gun-type electrode or the like are used. As the tip of the gun-type electrode, various shapes of chips are used depending on the portion to be welded. An example of the resistance welding device is described in Patent Document 1.

The welding quality in the resistance welding device depends on a welding current flowing in the portion sandwiched between the electrodes, an energization time of the welding current, and a pressing force applied to a workpiece by the electrode for welding. In the following description, these are referred to as welding conditions. Since users have great variation of requirements to the welding quality, they adjust welding conditions at the trial production stage to obtain optimum values.

[Prior art]

Patent Document 1: Japanese Patent Application publication No. 2019-150874

Patent Document 1: Japanese Patent Application publication No. HEI 7-178566

Patent Document 2: Japanese Patent Application publication No. HEI 9-029456

Patent Document 3: Japanese Patent Application publication No. HEI 11-047950

Patent Document 4: Japanese Patent Application publication No. 2005-128818

[SUMMARY OF INVENTION]

[Problem to Be Solved by the Invention]

As described above, in order to obtain the optimum value of the welding conditions that meet the user's requirements, the user creates a large number of samples with varying welding conditions, measures the bond strength and nugget diameter, and then, performs an overall evaluation including appearance or the like. Even with skilled operators, it may take tens of hours to find the optimum value of the welding conditions. With inexperienced operators, it may take even more time, and then, the optimal value cannot be found in some cases. The above-mentioned Patent Document 1 provides an idea for solving such problems.

In the Patent Document 1 introduces an example of providing a database that outputs welding conditions such as a welding current and an energization time, when elements such as the kind and the thickness of the material to be welded and the type (shape) of the electrode are input. However, there are various kinds of elements for determining the welding condition. For example, welding can be performed for the material which has been plated or for the material which is made from overlapped multiple materials with different thicknesses. Considering the above cases, the number of combination of elements becomes enormous. As the result, the size of database becomes huge and the production cost is increased.

No matter how extensive the database is, the operation of obtaining of the optimum value by repeating trial manufactures while adjusting the welding condition is not omittable in order to obtain the welding quality required by the user of the welding device.

In view of the foregoing, it is an object of the invention to provide a resistance welding device capable of obtaining a welding condition as close as the optimum value which meets the needs of user while suppressing the expansion of a database.

[Means for Solving the Problem]

The below configurations are means to solve the above problems.

<Configuration 1>

A resistance welding device for flowing a welding current between electrodes which sandwiches a workpiece including a plurality of overlapped materials while applying a pressure to the workpiece, the resistance welding device including:

an input device from which a plurality of elements used to determine welding conditions including the welding current, an energization time, and a pressing force applied to the workpiece by the electrodes is input;

an element selecting device configured to select basic elements including a kind and a thickness of a material constituting the workpiece and a type of an electrode from among the plurality of elements input from the input device and perform searching in a first database, and configured to select an additional element other than the basic elements from among the plurality of elements input from the input device and perform searching in a second database;

an operating device configured to execute a correction operation process for applying a search result in a second database to an initial value of a welding condition searched in a first database, and configured to output welding conditions including the welding current, the energization time, and the pressing force;

a display device configured to display the welding condition output from the operating device; and

a power supply device configured to control a welding of a workpiece based on the welding condition output from the operating device,

wherein the first database stores data among which welding conditions including a welding current, an energization time, and a pressing force corresponding to the basic elements are searched and output, and

wherein the second database stores, in association with an additional element or a combination of additional elements, data including one or more trend formulas used to correct an initial value of a welding condition output from a first database based on a nature of the additional element.

<Configuration 2>

The resistance welding device according to claim 1, wherein, when a welding is performed for a plurality of overlapped materials each having a different thickness, an input device receives a basic element including a thickness for each material,

wherein an element selecting device selects a basic element of each material in order and performs searching in a first database, and outputs an initial value of a welding condition of each material,

wherein an element selecting device performs searching in a second database with respect to an additional element for welding a plurality of materials each having a different thickness, and selects and outputs a trend formula used for a correction operation of a welding condition including a thickness ratio as a parameter, and

wherein the operating device executes a correction operation process using the trend formula, and outputs a welding condition including a welding current, an energization time, and a pressing force.

<Configuration 3>

The resistance welding device according to claim 1, wherein, when a welding which is divided into a plurality of times is performed for a plated material, a first database outputs a welding current, an energization time, and a cooling time between these weldings, for each time,

wherein an element selecting device performs searching in a second database with respect to an additional element for welding a plated material, and selects and outputs a trend formula used for a correction operation of a welding condition including a plated weight ratio to a reference value as a parameter, and

wherein the operation device executes a correction operation process for a first time of welding current and energization time and a second time of welding current and energization time, using a trend formula output from a second database, and outputs a welding condition including a welding current, an energization time, and pressing force.

<Configuration 4>

The resistance welding device according to any one of claims 1 to 3, wherein the element selecting device performs searching in a first database and a second database with respect to a plurality type of elements,

wherein a means for specifying a relative ratio of a required welding quality to a welding quality having a standard value of a welding condition output from the operating device is provided,

wherein an element selecting device performs searching in a second database to output a trend formula, which is used for executing a correction operation of a welding condition, corresponding to a combination of a plurality type of additional elements,

wherein the operating device executes a correction operation process of a welding condition for a search result in a first database, using the trend formula, the relative ratio being a parameter of the trend formula, and outputs welding conditions including a welding current, an energization time, and a pressing force.

<Configuration 5>

The resistance welding device according to any one of claims 1 to 4, wherein the input device includes an adjusting device to incrementally increase or decrease a welding condition displayed on the display device as a result of an operation process, by a limited amount within a pre-limited range to obtain a new welding condition.

<Configuration 6>

The resistance welding device according to any one of claims 1 to 5, further including a third database storing a new welding condition obtained by the adjusting device.

<Configuration 7>

The resistance welding device according to claim 6, wherein a second database and a third database configured to store a new trend formula obtained by back-calculating a parameter of a used trend formula based on a new welding condition obtained by the adjusting device.

<Configuration 8>

A computer program for controlling a resistance welding machine to function a computer as the input device, the element selecting device, the operating device and the display device according to claim 1.

<Configuration 9>

A recording medium storing the computer program according to claim 8 and readable by a computer.

[Effects of the Invention]

<Effect of Configuration 1>

It becomes possible to obtain a welding condition close to an optimum value while suppressing an expansion of the entire database, by correcting an initial value of a welding condition using a trend formula corresponding to a combination or the like of basic elements and additional elements, even when there exist various additional elements other than basic elements.

<Effect of Configuration 2>

When plates with different thicknesses are overlapped and welded, it becomes possible to select an appropriate trend formula for correction and obtain a welding condition close to the optimum value by combining welding conditions for each thickness of the plates and specifying a thickness ratio as an additional element.

<Effect of Configuration 3>

When a plated material is welded, for example, initial values of two times of the welding conditions and a cooling period between the two times of the welding are output from the first database. Then, the plating weight or the like is designated as the additional element. Thus, an appropriate trend formula for correction can be selected from the output of the second database. As the result, it become possible to obtain a welding condition close to the optimum value.

<Effect of Configuration 4>

A ratio of the required welding quality relative to the welding quality obtained by using a standard value of a preset welding condition can be specified. With this configuration, it becomes possible to adjust the result of the correction operation process using a trend formula so that welding conditions close to the user's required conditions are always obtained. Therefore, the entire database can be collectively customized to a userpreferred property.

<Effect of Configuration 5>

By gradually increasing or decreasing the welding condition in a pre-limited range and by a pre-limited width, it becomes possible to automatically indicate a procedure that is easy to reach the optimum value.

<Effect of Configuration 6>

The optimized welding conditions obtained by adjusting with the adjusting device can be accumulated. The welding condition can be output based on the elements. Thus, it becomes possible to directly utilize the optimized welding condition from the next time. Further, it becomes possible to improve the welding conditions based on the previous results.

<Effect of Configuration 7>

It becomes possible to obtain a new trend formula from the optimized welding condition obtained by adjustment with the adjusting device, and perform a calculation using this formula from the next time.

[Brief Description of the Drawings]

FIG. 1 is a functional block diagram showing an embodiment of a resistance welding device of the present invention.

FIG. 2 is a drawing showing an element input screen of an input device.

FIG. 3 is a diagram showing a structural example of a first database.

FIG. 4 is a diagram showing a structural example of a second database.

FIG. 5 is a diagram showing a second structural example of the second database.

FIG. 6 is a diagram showing a third structural example of the second database.

FIG. 7 is a flowchart showing an example of operation of an operating device.

FIG. 8 is an explanatory view showing a welding process of two materials having different thicknesses.

Fig. 9 is a diagram showing a structural example of a second database for welding plates with different thicknesses.

FIG. 10 is an explanatory view showing a welding process of two plated materials.

FIG. 11 is a diagram showing a structural example of the first database for a plated plate.

FIG. 12 is a diagram showing a structural example of the second database for the plated plate.

FIG. 13 is a block diagram of a modification of the resistance welding device.

FIG. 14 is a diagram showing a structural example of a third database.

FIG. 15 is a view showing an example of an operation screen.

[PREFERRED EMBODIMENTS]

Hereinafter, embodiments of the present invention will be described in detail for each embodiment.

[Embodiment 1]

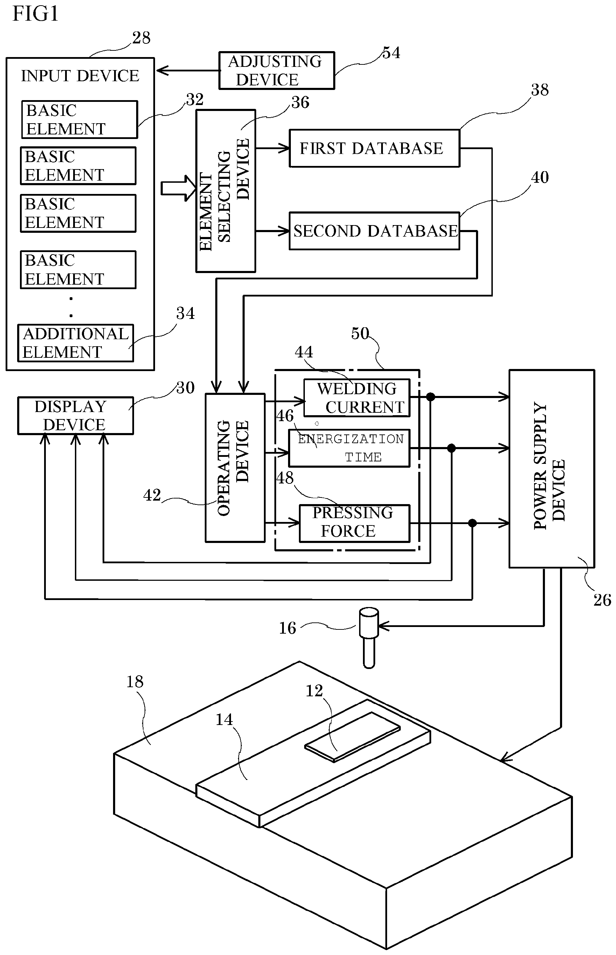

FIG. 1 is a functional block diagram showing an embodiment of a resistance welding device of the present invention.

In the example shown in FIG. 1, a workpiece made by overlapping an upper workpiece 12 on a lower workpiece 14 is placed on a lower electrode 18 which is a table-type. An upper electrode 16 which is a gun-type is pressed to apply a pressing force to the portion sandwiched by the electrodes. Then, a welding current 44 is flowed between the electrodes. It is also possible to weld a workpiece made by overlapping three or more materials.

As shown in FIG. 1, the resistance welding device is provided with devices such as an input device 28, an element selecting device 36, a first database 38, a second database 40, an operating device 42, a display device 30, a power supply device 26, and an adjusting device 54. The input device 28, the display device 30, and the adjusting device 54 are integrated into a touch panel type of display, for example.

The display device 30 displays welding conditions 50 output from the operating device 42 on a display. The adjusting device 54 includes a button or the like for the user to adjust the obtained welding condition 50 in order to obtain a required welding quality. Of course, the input device 28, the display device 30, and the adjusting device 54 may be incorporated into independent panels or the like, respectively.

The power supply device 26 is provided with a known power supply circuit for supplying a welding current between the upper electrode 16 and the lower electrode 18. The power supply device 26 controls welding of the workpiece using the welding conditions 50 output from the operating device 42.

The element selecting device 36 and the operating device 42 are computer program modules for controlling the resistance welding device. Both of them execute operating processes for realizing functions described below, and they are not necessarily independent of each other and may be mixed. In other words, they may be integrated. The first database 38 and the second database 40 are stored in a storage device (not shown) incorporated in the resistance welding device. The storage device may be an external storage device connected via a network.

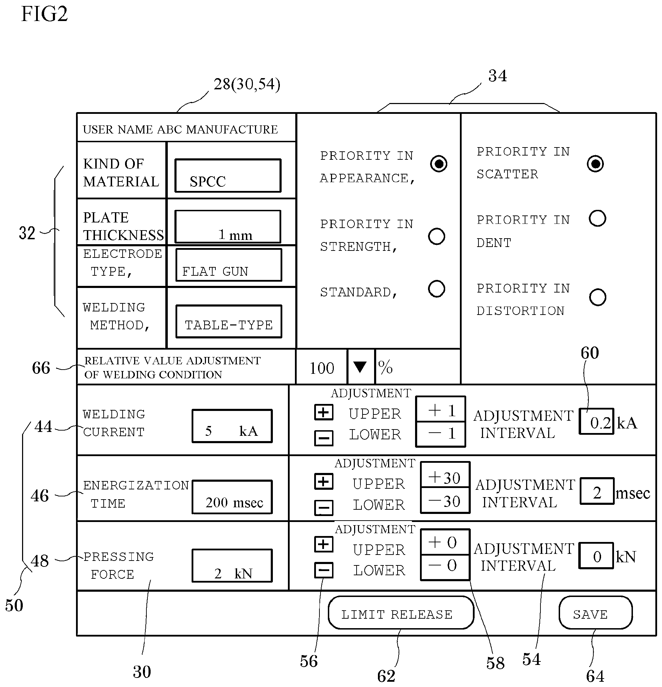

FIG. 2 is a drawing showing an element input screen of the input device.

The input device 28 is a man-machine interface for inputting a plurality of elements for determining the welding conditions 50 including the welding current 44, the energization time 46, and the pressing force 48 applied to the workpiece by the electrodes. The screen as shown in this figure is displayed on the input device 28 of the resistance welding device.

In the example of this figure, the screen in which the input device 28, the display device 30, and the adjusting device 54 are integrated is shown. The portion where the welding current 44, the energization time 46, and the pressing force 48 are output and displayed corresponds to the display device 30. The portion where "adjustment upper limit (lower limit)" and "adjustment interval" are displayed is the adjusting device 54. The functions and operations of the adjusting device 54 and a relative value adjusting unit 66 for welding conditions shown in this screen will be described in detail in the later embodiments.

The plurality of elements include, in the example of this figure, a kind of material, a plate thickness (thickness), and an electrode type (type), a welding method (a table-type of electrode in the example of the figure), etc.. In addition, the appearance and the strength of the product after welding can be specified. In this example, it is possible to specify "appearance is given priority." "Scatter," "dent," and "distortion" affect the appearance. It is possible to specify which of these should be prioritized.

Here, the kind of material, the plate thickness, the electrode type, and the like are referred to as basic elements 32. Elements other than the basic elements 32 are referred to as additional elements 34. As will be described later, the additional elements 34 may include variety of things. The basic element 32 may include other elements specified with numerical values, properties, types, product names, or the like, which are capable of uniquely determining the welding condition 50.

Various elements corresponding to the basic elements 32 can exist. However, if the basic elements 32 are increased, the data size may also be increased in the structure of the first database 38. Therefore, as in this embodiment, it is most practical to use those three elements; the kind of material, the plate thickness (thickness), and the electrode type (type).

The element selecting device 36 (FIG. 1) has a function of selecting the basic element 32, executing a process of searching in the first database 38, selecting the additional element 34, and executing a process of searching in the second database 40.

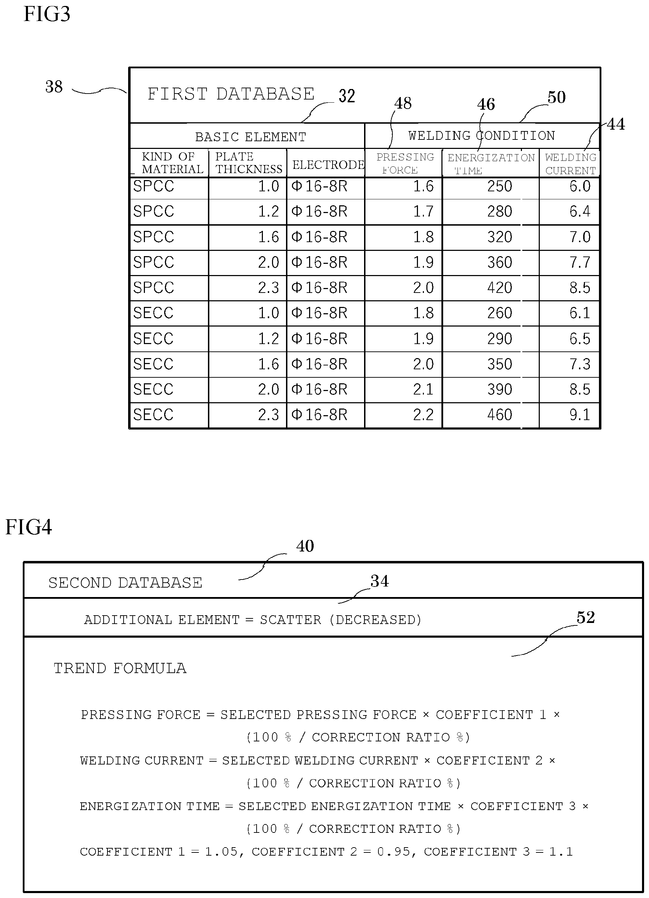

FIG. 3 shows an example of the structure of the first database.

The first database 38 stores data among which the welding current 44, the energization time 46, the pressing force 48, and the like corresponding to the basic element 32 are searched and output. When the kind of material, the plate thickness (thickness), and the electrode type are specified and input, the welding conditions 50 such as the welding current 44, the energization time 46, and pressing force 48 applied to the workpiece by the electrodes which are suitable to the welding are uniquely output as numerical values.

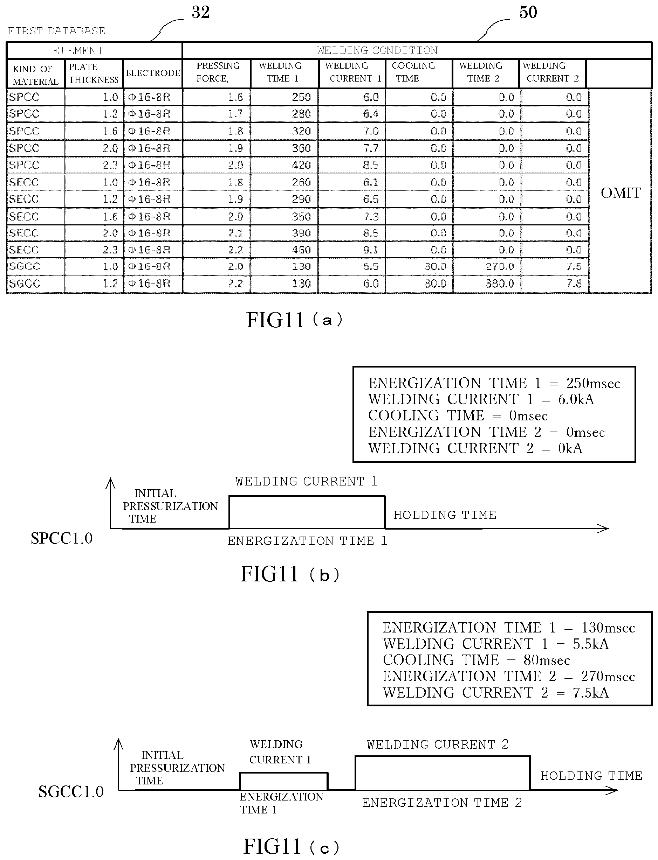

The structure of the first database 38 illustrated in FIG. 3 is as described in Patent Document 1, for example. As will be described later with reference to FIG. 11, functions specific to the present invention can be further added thereto. Note that the welding condition 50 output from the first database 38 is corrected thereafter. Therefore, the welding condition 50 output from the first database 38 is referred to as an initial value of the welding condition. The data included in the initial values of the welding condition are referred to as a selected welding current 44, a selected energization time 46, and a selected pressing force 48, respectively.

FIGS. 4 to 6 show examples of the structure of the second database.

FIG. 4 shows three kinds of trend formulas 52 used for calculating correction coefficients of the welding current 44, the energization time 46, and the pressing force 48 in the case where the "appearance" is given priority and the "scatter" is given priority among them. The "appearance is given priority" and the "scatter is given priority" are the additional elements 34. Thus, the second database 40 stores, in association with the additional elements 34, one or more of trend formulas 52 used for correcting the search results output from the first database 38 in accordance with the properties of the additional elements 34.

The additional element 34 may be singular or plural. The trend formula 52 to be output may also be singular or plural. When there is a plurality of additional elements 34, trend formulas corresponding to the combinations thereof are stored.

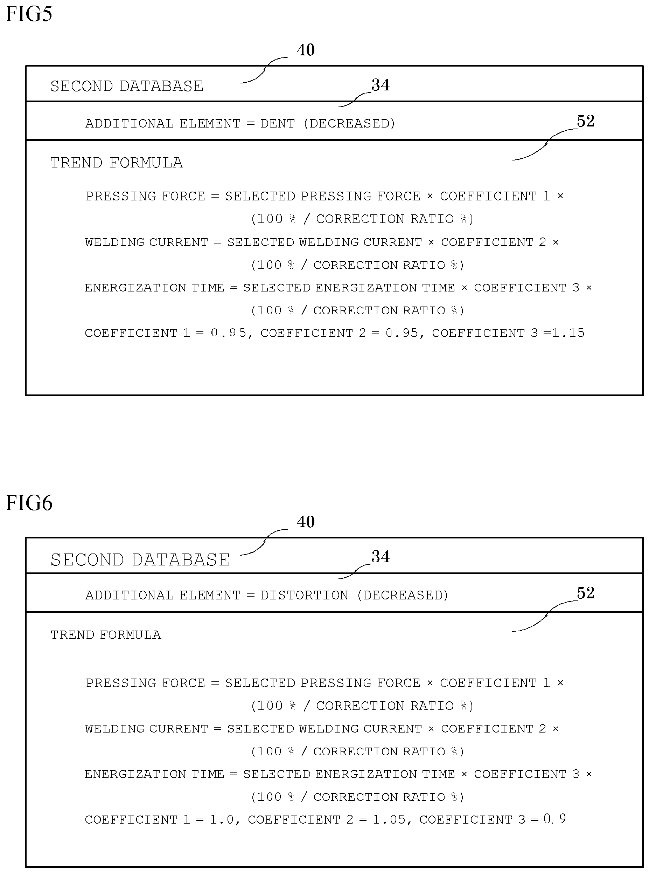

Coefficients 1 to 3 of the trend formula 52 shown in FIG. 4 are determined in advance by experiments or the like according to the type of additional elements. FIG. 5 and FIG. 6 show the trend formula 52 in the case where priority is given to "dent" or "distortion." Although the formulas have a same form, only the coefficients 1 to 3 are different for "scatter", "dent" and "distortion."

When the additional element 34 is input to the input device 28, the corresponding trend formula 52 is output, and when the calculation is performed after determining parameters such as coefficients 1 to 3, a correction coefficient for correcting the output of the first database 38 can be obtained. Note that arbitrary variables in the trend formula such as coefficients 1 to 3 and correction rates are referred to as parameters.

In the examples shown in FIGS. 4 to 6, the trend formula 52 includes the selected welding current 44, the selected energization time 46, the selected pressing force 48, and the like. These are the initial values of the welding conditions 50 output from the first database 38. In this manner, three kinds of trend formulas 52 for obtaining correction coefficients for correcting each initial value are output from the second database 40. In addition, the trend formula 52 for correcting only one part of the initial values of the welding condition 50 can be output.

The trend formulas 52 shown in FIGS. 4 to 6 have a common form except for the parts of coefficients 1 to 3. If these parameters are replaced by variables, wide range of correction coefficients can be calculated. That is, since the obtained correction coefficient can be changed according to the input parameter in one kind of trend formula 52, the data size of the second database 40 can be sufficiently smaller than that of the first database 38.

The trend formulas 52 shown in FIGS. 4 to 6 include variables (correction rate%), which are parameters. This (correction rate%) is set in a range of 95% to 1050, for example. The first database 38 and the second database 40 are created by the welding device manufacturer, based on the experience so as to obtain appropriate welding quality. However, the welding quality determined by the welding device manufacturer is a standard value, and may be slightly different from the welding quality required by users.

(Correction ratio%) solves this problem. The difference between the standard value and the welding quality required by the user can be adjusted by specifying a relative ratio using the relative value adjusting unit 66 (FIG. 2). For example, if this is set to 1020, a correction of (1000 / 102%) is performed to the calculation result of all of the trend formulas shown in FIGS. 4 to 6. As a result, the entire database can be collectively customized to have the properties that the user prefers.

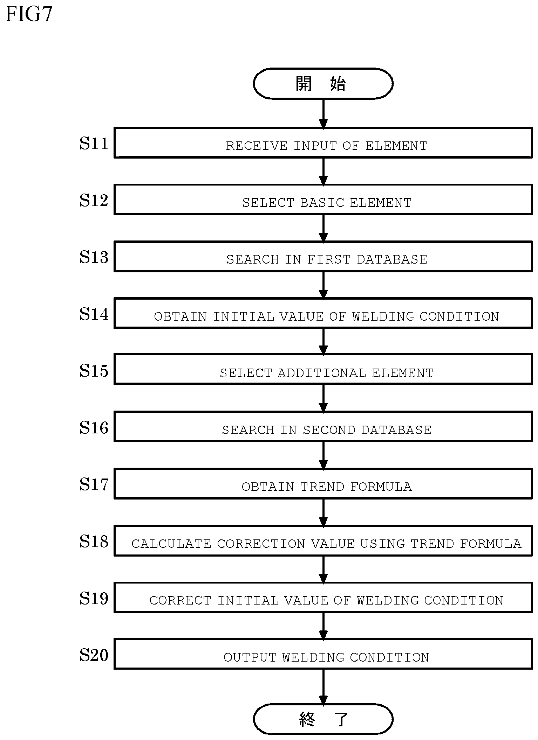

FIG. 7 is a flow chart showing an operation example of the operating device 42.

The operating device 42 (FIG. 1) has a function of executing the above-described correction operation process for applying the search result in the second database 40 to the search result in the first database 38, and outputting the welding conditions 50 including the welding current 44, the energization time 46, the pressing force 48 and the like obtained as a result of the operation process.

Specifically, as shown in FIG. 7, first, in step S11, elements are input from the input device 28. In step S12, the element selecting device 36 selects the basic elements 32. In step S13, the element selecting device 36 performs searching in the first database with respect to the basic element 32.

In step S14, the operating device 42 obtains an initial value of the welding condition. In step S15, the element selecting device 36 selects the additional element 34. In step S16, the element selecting device 36 performs searching in the second database.

In step S17, the operating device 42 obtains a trend formula. In step S18, the correction value is calculated based on the obtained trend formula. In step S19, the initial value of the welding condition 50 is corrected based on the correction value. In step S20, the welding condition 50 is output and displayed on the display device 30. Further, the welding condition 50 is output to the power supply device 26 automatically or by user's operation.

As described above, when various additional elements 34 other than the basic element 32 exist, the welding condition 50 can be corrected by using the trend formula 52 corresponding to the additional element 34 or the combination of the additional elements 34. Therefore, the welding condition 50 closer to the optimum value can be obtained while suppressing the expansion of the entire database, particularly the first database 38.

As described above, by specifying prioritizing either "strength" or "appearance" with respect to the additional element 34, the welding conditions can be corrected according to the quality required for the welded product. Further, by using the function of the relative value adjusting unit 66, it is possible to collectively adjust the operation process results from various kinds of trend formulas for calculating the correction coefficients.

[Embodiment 2]

(Welding of plates having different thicknesses)

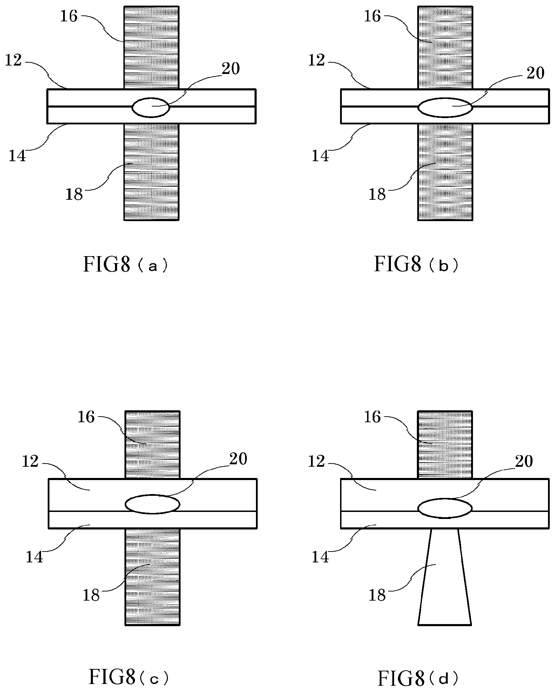

FIG. 8 is an explanatory view showing the welding process of two materials having different thicknesses.

In performing spot welding, the upper workpiece 12 and the lower workpiece 14 are sandwiched by the upper electrode 16 and the lower electrode 18, a pressing force is applied to the sandwiched upper workpiece 12 and lower workpiece 14 by the electrodes, and a current of several thousands to several tens of thousands amperes (A) is flowed between the upper and lower electrodes. The welded material is melted by heat generated by its own resistance, causing an elliptical nugget 20 to be formed.

The contact resistance at the contact portion between the upper workpiece 12 and the lower workpiece 14 is larger than the resistance value of the material. The contact resistance at the center portion where the pressing force is applied by the electrodes becomes smaller than the contact resistance at the periphery, so that a current easily flows. Since the current density at the center portion increases, the material starts to melt from the center portion. The required shear strength after welding is related to the plate thickness. As the plate thickness increases, more strength is required. Therefore, the required nugget diameter also increases. That is, as the plate thickness increases, the volume to be melted increases and the energy required for welding also increases.

On the other hand, the upper electrode 16 and the lower electrode 18 are made of a copper alloy and are cooled by cooling water circulating inside of them so as not to be melted by welding heat. The upper workpiece 12 and the lower workpiece 14 usually have a measurable size. Therefore, although the central portion is melted by welding, the peripheral portion radiates heat through the electrodes or from the surface of the workpiece itself.

In an extreme case, even if an electric current is supplied for a long time at a low current value, the workpieces may not be melted at all and cannot be welded due to heat radiation from the electrodes and the workpiece itself. The volume of the portion to be melted to form the nugget 20 is correlated with the electrode tip area $\times$ (plate thickness of upper workpiece + plate thickness of lower workpiece).

The electric energy to be supplied is calculated using (square of welding current value $\times$ resistance $\times$ energization time), and heat is generated by this energy. If the welding current is lowered, it is necessary to lengthen the energization time. However, when the energization time is lengthened, the amount of heat radiation increases. Therefore, the welding current value must be set higher by that amount. When the pressing force is increased, the range in which the welding current flows through the material is expanded. As the result, the current density is lowered. In this case, it is necessary to increase the welding current or lengthen the energization time.

When the welding current is increased or the energization time is lengthened, the energy to be supplied is also increased. As the result, a phenomenon in which the molten material flies out (scattering occurs) from the periphery of the nugget 20 occurs. This may lead to decrease in welding strength, decrease in welding quality, and poor welding. As described above, if pressing force is increased, it is necessary to increase the welding current or to lengthen the energization time. In any case, multiple adjustments must be performed at the same time.

To what degree of the appearance and the strength the user requires is important. As described above, the adjustment becomes complicated, accordingly. The above trend formula contributes to output welding conditions that facilitate the adjustment. In the case of (a) and (b) in FIG. 8, the thicknesses of the two plates to be welded are equal. When the thicknesses of the two plates are different as shown in (c) and (d), further handling is required in (c) and (d).

That is, when two plates are welded, the required welding strength is generally determined by the thickness of the plate on the thin plate side. The upper limit of the shear strength of the welding portion is the strength of the base material. If the strength of the welded portion exceeds the strength of the base material, the portion around the nugget of base material breaks first in a manner for a plug to come out. Thus, when a thick plate and a thin plate are welded, the base material on the thin plate side breaks first.

(c) shows the case of a nearly flat electrode, and (d) shows the case of an electrode in which the tip of the electrode becomes narrower toward the thin plate side. The upper workpiece 12 is a thick plate and the lower workpiece 14 is a thin plate. The generation of the nugget 20 starts from the contact portion between the two plates and gradually shifts to the central portion of the two plates, whereby the nugget 20 is generated in the central portion.

When the nugget 20 is formed in the center portion, the nugget diameter contributing to the strength becomes small when viewed from the thin plate side. However, the welding strength is regulated on the thin plate side. Therefore, the required strength can be satisfied even when the nugget diameter becomes small.

Flat or nearly flat electrodes are used to improve the welding quality in appearance. There is no problem when the thicknesses of the two plates to be welded are close to each other. However, as the difference between those plate thicknesses increases, the nugget diameter contributing to the strength decreases, and it becomes difficult to obtain the required nugget diameter or welding strength.

Usually, the welding quality in appearance is required only on the outer surface of the product called an outer plate, not on both sides. The appearance of the opposite side is not required in many cases. In addition, in many cases, a thick plate is used as a workpiece constructing a framework to which strength is required, while a thin plate is used at the outside. It is preferable to use a flat electrode for the surface where the welding quality in the appearance is required, so that a dent is not left.

As shown in FIG. 8 (d), when an electrode having a narrow tip is used as the electrode on the thin plate side so that the path of the current is concentrated on the thin plate side, the nugget 20 is generated so as to be biased toward the thin plate side. The welding condition at this time is close to that of the thin plate side. If a flat electrode such as a table-type is used, the welding conditions cannot be easily set.

Normally, welding can be performed based on the welding conditions on the thin plate side. However, when the plate thickness ratio is large, the values are far from proper values even if the welding conditions are adjusted based on those on the thin plate side. It is easy for an expert to make the adjustment based on experience, but it is not easy for a person with little experience to make the adjustment.

Further, in the welding of plates having large thickness difference, the welding condition is far from the condition on the thin plate side. If the welding condition of the thick plate side is adopted, excessive welding and scattering occurs, and proper welding cannot be performed. It is considered that the appropriate welding conditions when the difference in plate thickness is large tend to correlate with welding current, energization time, and plate thickness ratio based on the welding conditions on the thin plate side.

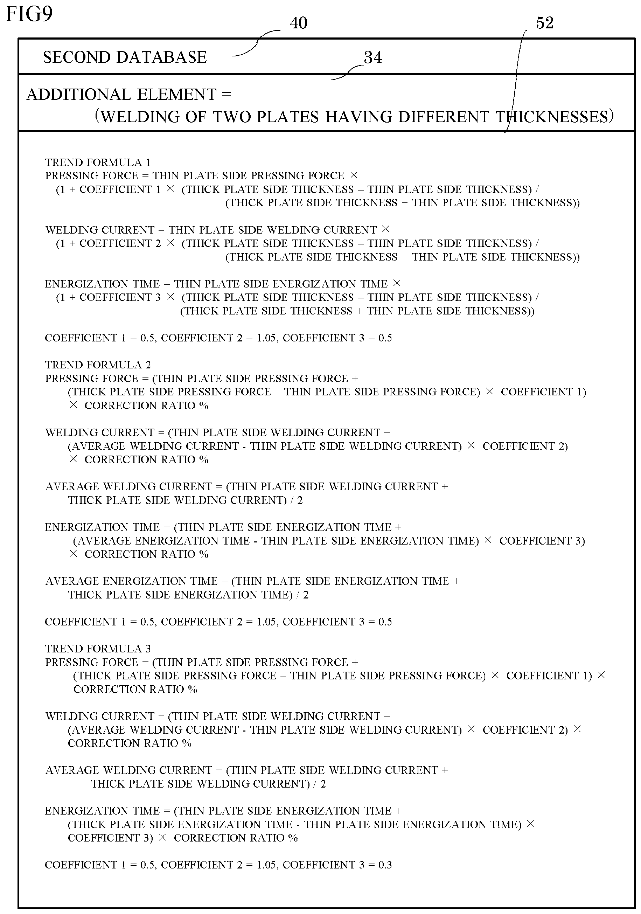

FIG. 9 shows an example structure of a second database for welding plates of different thicknesses.

In the present invention, first, the basic element 32 of the upper workpiece 12 and the basic element 32 of the lower workpiece 14 are input from the input device 28 (FIG. 2). Then, the element selecting device 36 performs searching in the first database 38 to obtain initial values of the two sets of welding conditions 50. That is, one set including the welding current 44 on the thick plate side, the energization time 46 on the thick plate side, and the pressing force 48 on the thick plate side is obtained; and the other set including the welding current 44 on the thin plate side, the energization time 46 on the thin plate side, and the pressing force 48 on the thin plate side is obtained.

The initial values of the two sets of welding conditions 50 are corrected by, for example, any one of three kinds of trend formulas 52. The trend formula 1 is used to perform a correction based on the welding condition of the thin plate side. In this case, additional elements with respect to welding of different thicknesses of plates with the following thickness ratio can be specified.

Even if the electrode on the lower plate side is a plane electrode, the trend formulas may be different between (thickness of upper plate > thickness of lower plate) and (thickness of upper plate < thickness of lower plate). Therefore, it is necessary to provide the trend formula separately. Here, the case where (plate thickness of upper plate > plate thickness of lower plate) and the electrode on the lower plate side is a plane electrode will be described. Since the trend formula may be different depending on the kind of material to be welded, the shape of the workpiece, and the shape of the upper electrode, it is preferable to provide the trend formula for each of them.

For example, in the case of the kind of material: SPCC, the upper plate: 2.0mm, the lower plate: 1.0mm, and the lower plate side: a plane electrode (table-type), the following data is obtained by searching in the first database.

The upper plate (2.0mm): "pressing force: 1.9kN", "welding current: 7.7KA", "energization time: 360msec"

The lower plate (1.0mm): "pressing force: 1.6kN", "welding current: 6.OKA", "energization time: 250msec"

When the correction ratio is 100%, the following calculation is performed using the trend formula 2 in FIG. 9. Thus, the corrected welding current 44, the corrected energization time 46, and the corrected pressing force 48 are obtained.

```
Pressing force = (thin plate side pressing force + (thick plate
side pressing force - thin plate side pressing force) ×
coefficient 1) × correction ratio % = 1.6kN + (1.9kN - 1.6kN) ×
0.5 × 100% = 1.75kN
```

```
Welding current = (thin plate side welding current + (average
welding current - thin plate side welding current) × coefficient
2) × correction ratio % = 6.0kA + (6.85kA - 6.0kA) × 1.05 × 100% =
6.89kA
```

```
Average welding current = (thin plate side welding current + thick
plate side welding current) / 2 = (7.7kA + 6.0kA) / 2 = 6.85kA
```

```
Energization time = (thin plate side energization time + (average
energization time - thin plate side energization time) ×
coefficient 3) × correction ratio % = 250msec + (305msec -
250msec) × 0.5 × 100% = 278msec
```

```
Average energization time = (thin plate side energization time +
thick plate side energization time) / 2 = (250msec + 360msec) / 2
= 305msec
```

[Embodiment 3]

(Welding of Plated Plates)

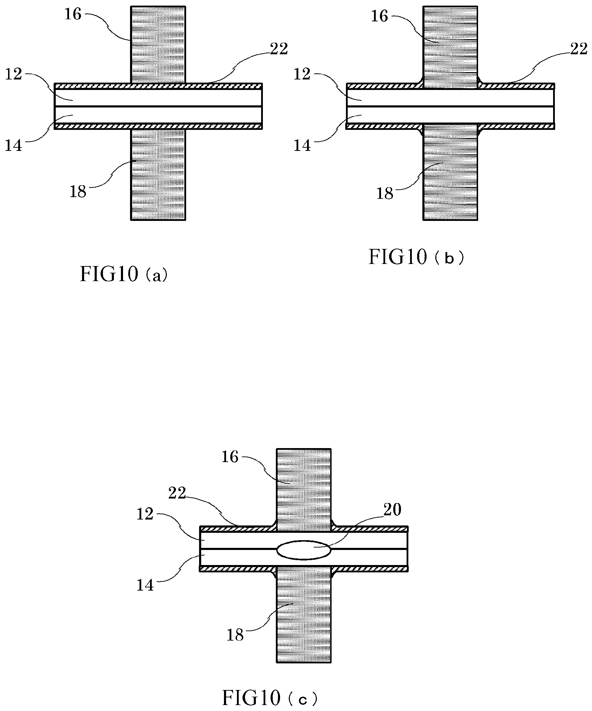

FIG. 10 is an explanatory view showing the welding process of two plated materials.

The welding conditions for the plated material differ depending on the type of plating and the plating weight (plating thickness). The plating has a lower melting point than the base material. Therefore, the plating layer 22 between the electrode and the workpiece melts in the initial stage when energization is started. Because of the pressing force applied by the electrodes, the molten plating layer 22 is pushed out and sticks around the electrodes.

That is, as shown in FIGS. 10 (a) and 10 (b), the plating layer 22 sticks around the upper electrode 16 and the lower electrode 18, thereby the range in which the current flows easily expanding. Therefore, the welding current is higher and the energization time is longer than that of the non-plated material.

If the plating layer 22 is thin, the amount of the plating layer 22 melting and clinging to the electrode in the initial stage of energization is small. Therefore, the welding condition is close to that of a non-plated material. However, the welding current is slightly higher and the energization time is slightly longer.

When the thickness of the plating layer 22 is increased, the welding cannot be performed under the condition close to that for welding without plating. In this case, a welding method called double energization is usually adopted. In the double energization, the plating layer 22 is melted by the first energization and the plating layer 22 sticks around the electrode. After a cooling time, the molten state of the plating layer 22 is returned to a solid state. Then, main energization is performed in the stable state. In some cases, energization can be performed three times or more.

Although the welding condition of the main energization is close to that of the non-plated material, the welding current becomes higher and the energization time longer since the plating layer 22 sticks around the electrodes. As the thickness of the plating layer 22 increases, the welding current becomes higher and the welding time becomes longer in order to move the plating layer 22 toward the circumference of the electrode at the initial stage. Similarly in the main energization, as the thickness of the plating layer 22 increases, the amount of the plating layer 22 sticking around the electrodes increases, so that the welding current becomes higher and the welding time longer.

As the thickness of the plating layer 22 increases, the variation in thickness tends to increase. The plating thickness 22 is managed with the plating weight ($g/m^2$). In the case of a plated material with narrow plating thickness variation, energization is performed once. In the case of a plated material with wide plating thickness variation, energization is performed twice.

FIG. 11 shows a first database structure for a plated plate.

The first database is configured to perform similar outputting for any of single or double welding. That is, when the basic element 32 is input, two sets of welding time and welding current are output other than the pressing force of the electrodes.

The cooling time between the first welding and the second welding is also output. The initial pressurization time shown in (b) and (c) of FIG. 11 is a preparing time before welding starts. The holding time is the post-treatment time after the end of welding until the state of the welded portion is stabilized. These can be set freely by the user.

When just one welding is performed, "0" is output as the cooling time, the energization time 2, and the welding current 2. In the case of welding twice, actual numerical values are applied to cooling time, the energization time 2, and the welding current 2. In the case of welding twice, as shown in this figure, data is output from the first database such that the welding current 1 is supplied during the energization time 1 after the initial pressurization time, and then the welding current 2 is supplied during the energization time 2 after the cooling time to terminate the welding. The data output from the first database is corrected by the corresponding trend formula 52.

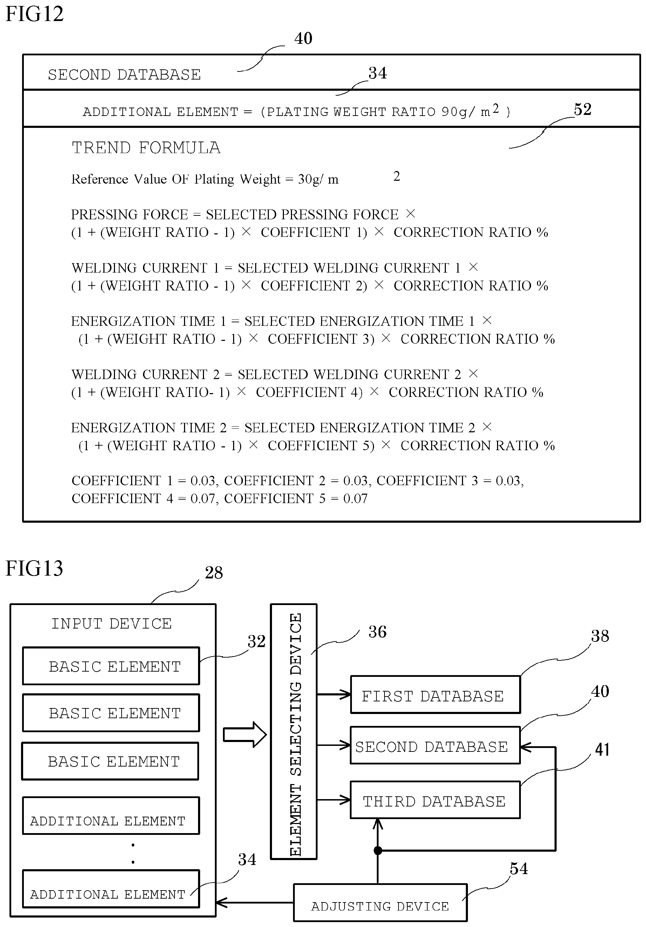

FIG. 12 shows an example structure of a second database for a plated plate.

In the case of twice energization, the trend formula 52 in this figure is used. What is shown here is a trend formula in the case where the variation in plating thickness is wide. In this case, the welding of the plated plate corresponds to an additional element, and searching in the second database can be performed by specifying the plating weight as the additional element.

In the case of a plated material, the molten plating at the initial stage of energization sticks to the circumference of the electrode, and the current path expands. As the result, the current density decreases. The influence of sticking around the electrodes and the degree of decrease in the current density correlate with the plating weight.

The minimum value of the plating weight is set as the reference value, and the plating weight ratio to the reference value is set as a parameter. For example, when the plating weight $30g/m^2$ is set as the reference value and the plating weight is $90g/m^2$, the plating weight ratio = 90 / 30 = 3 is set as a parameter. The following calculations can automatically output the characteristic welding conditions for plated materials.

In the case of Material: AAA and Reference plating weight: $30g/m^2$

Coefficient 1 = 0.03

Coefficient 2 = 0.03

Coefficient 3 = 0.03

Coefficient 4 = 0.07

Coefficient 5 = 0.07

In the case of Plate thickness: 1.0mm

Pressing force = 2.0kN
Welding current 1 = 5.0kA
Energization time 1 = 150msec

Welding current 2 = 7.5kA
Energization time 2 = 250msec

In the case of Material plating weight: 90g/m², Plate thickness: 1.0mm, Correction ratio: 100%, the weight ratio is set to 90/30 = 3.

```
Pressing force = 2.0kN × (1 + (3-1) × 0.03) × 100% = 2.12kN

Welding Current 1 = 5.0kA × (1 + (3-1) × 0.03) × 100% = 5.3kA

Energization time 1 = 150msec × (1 + (3-1) × 0.03) × 100% =
159msec

Welding Current 2 = 7.5kA × (1 + (3-1) × 0.07) × 100% = 8.6kA

Energization time 2 = 250msec × (1 + (3-1) × 0.07) × 100% =
285msec
```

In some cases, the melting is terminated with a single energization. Although the trend formula of the single energization is not shown, the following formula is obtained. The formula corresponds to the first time in the above trend formula. However, the coefficients are different from those of the above trend formula.

```
Pressing force = Selected pressing force × (1 + (weight ratio - 1)
× coefficient 1) × correction ratio %

Welding current 1 = Selected welding current 1 × (1 + (Weight
Ratio - 1) × coefficient 2) × correction ratio %

Energization time 1 = Selected energization time 1 × (1 + (weight
ratio - 1) × coefficient 3) × correction ratio %

Coefficient 1 = 0.03, Coefficient 4 = 0.08, Coefficient 5 = 0.08
```

[Example 4]

After the welding condition 50 is output from the operating device 42, the welding condition can be adjusted by operating the screen shown in FIG. 2 so as to obtain the welding quality, for example, strength and appearance, which the user expects for the product.

The adjustment button 56 shown in FIG. 2 is a button for individually increasing or decreasing the welding condition 50. An adjustment upper limit and an adjustment lower limit, which are the automatically set range of increase/decrease operation for adjustment, are displayed in the adjustment range 58. This prevents operation errors and the like since the range is automatically set to a range in which the desired welding quality can be obtained.

The adjustment interval 60 indicates a width that can be adjusted by a single click of the adjustment button 56, and an appropriate width is automatically set so that the user approaches the purpose little by little without passing through the target welding quality. The adjustment upper and lower limit release button 62 is a button for forcibly releasing the adjustment upper and lower limits. When the adjustment upper and lower limit release button 62 is used, adjustment beyond the adjustment range can be freely performed. When an optimum value is found by the adjustment, the result can be saved by clicking the data save button 64.

For example, the user determines whether or not the quality approaches the expected quality while increasing the value of the welding current. If the quality gets closer to the expected quality, the user performs adjustment by further increasing the value. If the quality becomes worse, the user performs adjustment by decreasing the value. It takes a lot of time to get closer to the desired quality by reducing the amount of adjustment little by little. If the adjustment amount is increased excessively, the optimum value may be passed or returned too much.

A skilled operator can reach the required welding condition with a small number of welding tests. However, a less experienced operator can take longer to reach the optimum value due to making too much adjustment at a time or inputting the incorrect condition. Such a problem can be solved by automatically setting the adjustment range 58 and the adjustment interval 60.

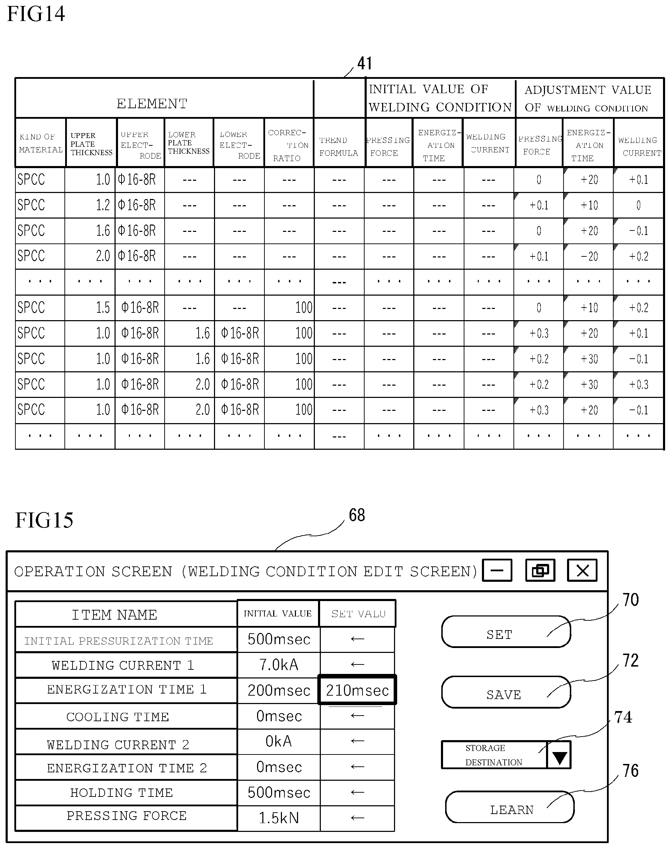

FIG. 13 is a block diagram of a modification of the resistance welding device. FIG. 14 is a diagram showing a configuration example of the third database. FIG. 15 is a diagram showing an example of an operation screen.
In the present invention, as described above, the adjustment amount is limited by providing the upper and lower limits of the reference adjustment range. Therefore, adjusting to a value far from the reference range by mistake is prevented.

For example, in the example shown in FIG. 2, the range in which the adjustment of the energization time is effective is automatically set to a range from 170msec to 230msec, and the welding condition is automatically set so as to be switched in every 2msec increment. By designing these parameters can be output from the second database 40, it becomes possible to efficiently reach the optimum value with appropriate using of the adjusting device 54.

Further, since a plurality of operations is required to switch the condition, the amount of one-time adjustment can be implicitly limited, and an appropriate adjustment can be performed. However, depending on the required welding quality, adjustment beyond the standard adjustment range may be necessary.

For example, if the welding strength is allowed to be fairly low (as long as it is attached), but the appearance such that the welded portion is invisible at all is required, adjustment beyond the standard range is necessary. In this case, the adjustment may be performed without any limitation on the adjustment range. When the adjustment upper and lower limit release button 62 (FIG. 2) is operated, an operation exceeding the limit can be performed. However, it is better to call attention by displaying "outside the limit."

For example, the energization time is adjusted from 200msec to 210msec, while the standard adjustment range is 170msec to 230msec.

When the adjustment button 56 (FIG. 2) is operated, the amount of increase/decrease adjustment (adjustment step) at one time is 2msec. Depending on how closely the welding condition output from the first database 38 approximate the required welding quality, the adjustment interval may be set within a range of 1% to 2% of the reference value. It is preferable to store the upper and lower limits of the adjustment range together with the trend formula in the second database 40.

If the kind and shape of material of the user's products (workpieces) are similar, the welding conditions are likely to be similar in many cases. Therefore, it is preferable to save a trend formula or the like associated with the result obtained by the adjustment by the user. In this embodiment, as shown in FIG. 13, a third database 41 is provided.

For example, as shown in FIG. 14, the third database 41 may store the initial values and adjustment values of the welding conditions output from the first database 38, the used trend formulas and parameters thereof, and the like in an arbitrary file format. It is preferable that the user uses the third database 41 to store these necessary data so that the user can perform welding operations thereafter under the optimized welding conditions.

If the combination of elements to be input has already been stored in the third database 41, the combination can be read out to confirm whether or not the adjustment work of the welding conditions is appropriate, and can be used immediately. In addition, even if further adjustment work is required, time to do such a work can be saved. Even if the welding conditions whose one element is coincident with the required element but another element is not coincident with the required element is stored in the third database 41, it is possible to save time by starting the adjustment work with the welding conditions.

On the other hand, the results stored in the third database 41 can also be used when the user requests welding conditions for different products in the future. In this case, if there is a combination of the same elements among the data stored in the third database 41, it becomes possible to generate new data by processing such as averaging, majority decision, using minimum value, using maximum value, etc.. The new data is added to the first database 38 and the second database 40. As a result, when an element is input later to obtain a welding condition, a welding condition to provide results close to the welding quality required by the user is output.

If the welding quality (such as the strength and appearance) of the user's product (workpiece) is close to the welding quality expected by the manufacturer of the resistance welding device, the welding conditions output from the operation device can be used with minor adjustments. However, when the welding quality required by the user is special, a large adjustment is required.

The third database 41 is suitable for determining welding conditions for products that are always produced by the user or welding conditions for similar products. Further, by using the third database 41, new data can be added to the first database 38 and the second database 40.

In order to do that, a learning function of the contents of the third database 41 is provided. That is, the combinations of the same elements are extracted from the third database 41, and the initial values of the welding conditions and the parameters of the trend formula output when those elements are input are optimized. For example, those methods (averaging, majority decision, using minimum value, using maximum value) may be adopted.

For example, when the welding condition obtained by inputting the elements (the material kind: SPCC, the upper plate thickness: 1.0, the upper electrode: Φ 16-8 R) is saved 10 times in a file, the average value is obtained for each item of the welding conditions from the 10 pieces of data, and they are aggregated into one piece of data. In the case of a majority decision, the value having the largest number may not be necessarily selected. For example, with respect to the energization time, the energization time is divided by 10msec intervals, and the number of data included in each range of 10 to 19,., 100 to 119, 120 to 129, ... may be obtained. Then, the ranges in which the data-save has been performed many times are selected by majority decision. Thus, data can be aggregated into an average value of the ranges.

In addition, for example, the welding condition obtained by the operating process using the trend formula 52 output from the existing second database 40 is compared with the welding condition optimized by the user. Then, based on the result, a parameter of the trend formula 52 is reversely calculated, and is stored in the second database 40 as a new data. For example, in the case of the trend formula 52 for the correction of the pressing force shown in FIG. 4, the coefficient 1 is reversely calculated from the optimized pressing force and stored as a new coefficient 1.

For example, an operation screen shown in FIG. 15 is used for this operation. For example, when a set value for the energization time is newly set on the operation screen 68, the setting button 70 is clicked. Actual welding is now available. Further, when the third database 41 is designated by the storage destination designation unit 74 and the save button 72 is clicked, the set value is stored in the third database 41. When the learning button 76 is clicked, a trend formula having the new parameter is stored in the second database 40 as described above.

In the above embodiment, the first database 38, the second database 40, and the third database 41 are provided independently for each other. However, common items exist in these databases. Therefore, the first database 38, the second database 40, and the third database 41 may be integrated into a single database in which all of items including the common items and the non-common items are mixed together. That is, it is important that the first database 38, the second database 40, and the third database 41 exits, having substantially same roles as the above-described roles.

The computer program and the database for controlling the device may be stored in storage devices such as servers connected through a network, in addition to various storage media mounted on the device itself.

[Description of the Reference Number]

12 upper workpiece

14 lower workpiece

16 upper electrode

18 lower electrode

20 nugget

22 plating layer

26 power supply device

28 input device

30 display device

32 basic element

34 additional element

36 element selecting device

38 first database

40 second database

41 third database

42 operating device

44 welding current

46 energization time

48 pressing force

50 welding condition

52 trend formula

54 adjusting device

56 adjustment button

58 adjustment range

60 adjustment interval

62 adjustment upper and lower limit release button

64 data save button

66 relative value adjusting unit

68 operation screen

70 setting button

72 save button

74 storage destination designation unit

76 learning button

**Claims**

1. A resistance welding device for flowing a welding current between electrodes which sandwiches a workpiece including a plurality of overlapped materials while applying a pressure to the workpiece, the resistance welding device comprising:

   an input device from which a plurality of elements used to determine welding conditions including the welding current, an energization time, and a pressing force applied to the workpiece by the electrodes is input;
   an element selecting device configured to select basic elements including a kind and a thickness of a material constituting the workpiece and a type of an electrode from among the plurality of elements input from the input device and perform searching in a first database, and configured to select an additional element other than the basic elements from among the plurality of elements input from the input device and perform searching in a second database;
   an operating device configured to execute a correction operation process for applying a search result in a second database to an initial value of a welding condition searched in a first database, and configured to output welding conditions including the welding current, the energization time, and the pressing force;
   a display device configured to display the welding condition output from the operating device; and

a power supply device configured to control a welding of a workpiece based on the welding condition output from the operating device,

wherein the first database stores data among which welding conditions including a welding current, an energization time, and a pressing force corresponding to the basic elements are searched and output, and

wherein the second database stores, in association with an additional element or a combination of additional elements, data including one or more trend formulas used to correct an initial value of a welding condition output from a first database based on a nature of the additional element.

2. The resistance welding device according to claim 1, wherein, when a welding is performed for a plurality of overlapped materials each having a different thickness, an input device receives a basic element including a thickness for each material,

wherein an element selecting device selects a basic element of each material in order and performs searching in a first database, and outputs an initial value of a welding condition of each material,

wherein an element selecting device performs searching in a second database with respect to an additional element for welding a plurality of materials each having a different thickness, and selects and outputs a trend formula used for a correction operation of a welding condition including a thickness ratio as a parameter, and

wherein the operating device executes a correction operation process using the trend formula, and outputs a welding condition including a welding current, an energization time, and a pressing force.

3. The resistance welding device according to claim 1, wherein, when a welding which is divided into a plurality of times is performed for a plated material, a first database outputs a welding current, an energization time, and a cooling time between these weldings, for each time,

wherein an element selecting device performs searching in a second database with respect to an additional element for welding a plated material, and selects and outputs a trend formula used for a correction operation of a welding condition including a plated weight ratio to a reference value as a parameter, and

wherein the operation device executes a correction operation process for a first time of welding current and energization time and a second time of welding current and energization time, using a trend formula output from a second database, and outputs a welding condition including a welding current, an energization time, and pressing force.

4. The resistance welding device according to any one of claims 1 to 3, wherein the element selecting device performs searching in a first database and a second database with respect to a plurality type of elements,

wherein a means for specifying a relative ratio of a required welding quality to a welding quality having a standard value of a welding condition output from the operating device is provided,

wherein an element selecting device performs searching in a second database to output a trend formula, which is used for executing a correction operation of a welding condition, corresponding to a combination of a plurality type of additional elements,

wherein the operating device executes a correction operation process of a welding condition for a search result in a first database, using the trend formula, the relative ratio being a parameter of the trend formula, and outputs welding conditions including a welding current, an energization time, and a pressing force.

5. The resistance welding device according to any one of claims 1 to 4, wherein the input device includes an adjusting device to incrementally increase or decrease a welding condition displayed on the display device as a result of an operation process, by a limited amount within a pre-limited range to obtain a new welding condition.

6. The resistance welding device according to any one of claims 1 to 5, further comprising a third database storing a new welding condition obtained by the adjusting device.

7. The resistance welding device according to claim 6, wherein a second database and a third database configured to store a new trend formula obtained by back-calculating a parameter of a used trend formula based on a new welding condition obtained by the adjusting device.

8. A computer program for controlling a resistance welding machine to function a computer as the input device, the element selecting device, the operating device and the display device according to claim 1.

9. A recording medium storing the computer program according to claim 8 and readable by a computer.

FIG1

FIG2

28(30,54)                                    34

| USER NAME ABC MANUFACTURE | | | | |
|---|---|---|---|---|
| KIND OF MATERIAL | SPCC | PRIORITY IN APPEARANCE, ◉ | PRIORITY IN SCATTER ◉ | |
| PLATE THICKNESS | 1 mm | PRIORITY IN STRENGTH, ○ | PRIORITY IN DENT ○ | |
| ELECTRODE TYPE, | FLAT GUN | | | |
| WELDING METHOD, | TABLE-TYPE | STANDARD, ○ | PRIORITY IN DISTORTION ○ | |

32

66 — RELATIVE VALUE ADJUSTMENT OF WELDING CONDITION   100 ▼ %

60

| | | ADJUSTMENT | | |
|---|---|---|---|---|
| 44 — WELDING CURRENT | 5    kA | ⊞ UPPER  +1  ⊟ LOWER  −1 | ADJUSTMENT INTERVAL  0.2 kA | |
| 46 — ENERGIZATION TIME | 200 msec | ⊞ UPPER  +30  ⊟ LOWER  −30 | ADJUSTMENT INTERVAL  2 msec | |
| 48 — PRESSING FORCE | 2  kN | ⊞ UPPER  +0  ⊟ LOWER  −0 | ADJUSTMENT INTERVAL  0 kN | |

50

( LIMIT RELEASE )                    ( SAVE )

30          56      62          58  54      64

FIG3

38

FIRST DATABASE 32    48    46    50
                                          44

| BASIC ELEMENT | | | WELDING CONDITION | | |
|---|---|---|---|---|---|
| KIND OF MATERIAL | PLATE THICKNESS | ELECTRODE | PRESSING FORCE | ENERGIZATION TIME | WELDING CURRENT |
| SPCC | 1.0 | Φ16-8R | 1.6 | 250 | 6.0 |
| SPCC | 1.2 | Φ16-8R | 1.7 | 280 | 6.4 |
| SPCC | 1.6 | Φ16-8R | 1.8 | 320 | 7.0 |
| SPCC | 2.0 | Φ16-8R | 1.9 | 360 | 7.7 |
| SPCC | 2.3 | Φ16-8R | 2.0 | 420 | 8.5 |
| SECC | 1.0 | Φ16-8R | 1.8 | 260 | 6.1 |
| SECC | 1.2 | Φ16-8R | 1.9 | 290 | 6.5 |
| SECC | 1.6 | Φ16-8R | 2.0 | 350 | 7.3 |
| SECC | 2.0 | Φ16-8R | 2.1 | 390 | 8.5 |
| SECC | 2.3 | Φ16-8R | 2.2 | 460 | 9.1 |

FIG4

40

| SECOND DATABASE 34 |
|---|
| ADDITIONAL ELEMENT = SCATTER (DECREASED) 52 |

TREND FORMULA

PRESSING FORCE = SELECTED PRESSING FORCE × COEFFICIENT 1 ×
(100 % / CORRECTION RATIO %)

WELDING CURRENT = SELECTED WELDING CURRENT × COEFFICIENT 2 ×
(100 % / CORRECTION RATIO %)

ENERGIZATION TIME = SELECTED ENERGIZATION TIME × COEFFICIENT 3 ×
(100 % / CORRECTION RATIO %)

COEFFICIENT 1 = 1.05, COEFFICIENT 2 = 0.95, COEFFICIENT 3 = 1.1

FIG5

SECOND DATABASE                                                    40

    ADDITIONAL ELEMENT = DENT (DECREASED)                    34

TREND FORMULA                                                     52

    PRESSING FORCE = SELECTED PRESSING FORCE × COEFFICIENT 1 ×
                   (100 % / CORRECTION RATIO %)
    WELDING CURRENT = SELECTED WELDING CURRENT × COEFFICIENT 2 ×
                   (100 % / CORRECTION RATIO %)
    ENERGIZATION TIME = SELECTED ENERGIZATION TIME × COEFFICIENT 3 ×
                   (100 % / CORRECTION RATIO %)
    COEFFICIENT 1 = 0.95, COEFFICIENT 2 = 0.95, COEFFICIENT 3 = 1.15

FIG6

SECOND DATABASE                                                    40

    ADDITIONAL ELEMENT = DISTORTION (DECREASED)              34

TREND FORMULA                                                     52

    PRESSING FORCE = SELECTED PRESSING FORCE × COEFFICIENT 1 ×
                   (100 % / CORRECTION RATIO %)
    WELDING CURRENT = SELECTED WELDING CURRENT × COEFFICIENT 2 ×
                   (100 % / CORRECTION RATIO %)
    ENERGIZATION TIME = SELECTED ENERGIZATION TIME × COEFFICIENT 3 ×
                   (100 % / CORRECTION RATIO %)
    COEFFICIENT 1 = 1.0, COEFFICIENT 2 = 1.05, COEFFICIENT 3 = 0.9

FIG7

開　始

S11 | RECEIVE INPUT OF ELEMENT

S12 | SELECT BASIC ELEMENT

S13 | SEARCH IN FIRST DATABASE

S14 | OBTAIN INITIAL VALUE OF WELDING CONDITION

S15 | SELECT ADDITIONAL ELEMENT

S16 | SEARCH IN SECOND DATABASE

S17 | OBTAIN TREND FORMULA

S18 | CALCULATE CORRECTION VALUE USING TREND FORMULA

S19 | CORRECT INITIAL VALUE OF WELDING CONDITION

S20 | OUTPUT WELDING CONDITION

終　了

FIG8（a）

FIG8（b）

FIG8（c）

FIG8（d）

**FIG9**

SECOND DATABASE      40     34         52

ADDITIONAL ELEMENT =
     (WELDING OF TWO PLATES HAVING DIFFERENT THICKNESSES)

TREND FORMULA 1
PRESSING FORCE = THIN PLATE SIDE PRESSING FORCE $\times$
   (1 + COEFFICIENT 1 $\times$ (THICK PLATE SIDE THICKNESS – THIN PLATE SIDE THICKNESS) /
                  (THICK PLATE SIDE THICKNESS + THIN PLATE SIDE THICKNESS))

WELDING CURRENT = THIN PLATE SIDE WELDING CURRENT $\times$
   (1 + COEFFICIENT 2 $\times$ (THICK PLATE SIDE THICKNESS – THIN PLATE SIDE THICKNESS) /
                  (THICK PLATE SIDE THICKNESS + THIN PLATE SIDE THICKNESS))

ENERGIZATION TIME = THIN PLATE SIDE ENERGIZATION TIME $\times$
   (1 + COEFFICIENT 3 $\times$ (THICK PLATE SIDE THICKNESS – THIN PLATE SIDE THICKNESS) /
                (THICK PLATE SIDE THICKNESS + THIN PLATE SIDE THICKNESS))

COEFFICIENT 1 = 0.5, COEFFICIENT 2 = 1.05, COEFFICIENT 3 = 0.5

TREND FORMULA 2
PRESSING FORCE = (THIN PLATE SIDE PRESSING FORCE +
    (THICK PLATE SIDE PRESSING FORCE – THIN PLATE SIDE PRESSING FORCE) $\times$ COEFFICIENT 1)
    $\times$ CORRECTION RATIO %

WELDING CURRENT = (THIN PLATE SIDE WELDING CURRENT +
    (AVERAGE WELDING CURRENT - THIN PLATE SIDE WELDING CURRENT) $\times$ COEFFICIENT 2)
    $\times$ CORRECTION RATIO %

AVERAGE WELDING CURRENT = (THIN PLATE SIDE WELDING CURRENT +
    THICK PLATE SIDE WELDING CURRENT) / 2

ENERGIZATION TIME = (THIN PLATE SIDE ENERGIZATION TIME +
     (AVERAGE ENERGIZATION TIME - THIN PLATE SIDE ENERGIZATION TIME) $\times$ COEFFICIENT 3)
    $\times$ CORRECTION RATIO %

AVERAGE ENERGIZATION TIME = (THIN PLATE SIDE ENERGIZATION TIME +
    THICK PLATE SIDE ENERGIZATION TIME) / 2

COEFFICIENT 1 = 0.5, COEFFICIENT 2 = 1.05, COEFFICIENT 3 = 0.5

TREND FORMULA 3
PRESSING FORCE = (THIN PLATE SIDE PRESSING FORCE +
     (THICK PLATE SIDE PRESSING FORCE – THIN PLATE SIDE PRESSING FORCE) $\times$ COEFFICIENT 1) $\times$
     CORRECTION RATIO %

WELDING CURRENT = (THIN PLATE SIDE WELDING CURRENT +
     (AVERAGE WELDING CURRENT - THIN PLATE SIDE WELDING CURRENT) $\times$ COEFFICIENT 2) $\times$
     CORRECTION RATIO %

AVERAGE WELDING CURRENT = (THIN PLATE SIDE WELDING CURRENT +
       THICK PLATE SIDE WELDING CURRENT) / 2

ENERGIZATION TIME = (THIN PLATE SIDE ENERGIZATION TIME +
     (THICK PLATE SIDE ENERGIZATION TIME - THIN PLATE SIDE ENERGIZATION TIME) $\times$
     COEFFICIENT 3) $\times$ CORRECTION RATIO %

COEFFICIENT 1 = 0.5, COEFFICIENT 2 = 1.05, COEFFICIENT 3 = 0.3

FIG10 (a)

FIG10 (b)

FIG10 (c)

FIRST DATABASE

32

50

| ELEMENT | | | WELDING CONDITION | | | | | | |
|---|---|---|---|---|---|---|---|---|---|
| KIND OF MATERIAL | PLATE THICKNESS | ELECTRODE | PRESSING FORCE, | WELDING TIME 1 | WELDING CURRENT 1 | COOLING TIME | WELDING TIME 2 | WELDING CURRENT 2 | |
| SPCC | 1.0 | Φ16-8R | 1.6 | 250 | 6.0 | 0.0 | 0.0 | 0.0 | |
| SPCC | 1.2 | Φ16-8R | 1.7 | 280 | 6.4 | 0.0 | 0.0 | 0.0 | |
| SPCC | 1.6 | Φ16-8R | 1.8 | 320 | 7.0 | 0.0 | 0.0 | 0.0 | |
| SPCC | 2.0 | Φ16-8R | 1.9 | 360 | 7.7 | 0.0 | 0.0 | 0.0 | |
| SPCC | 2.3 | Φ16-8R | 2.0 | 420 | 8.5 | 0.0 | 0.0 | 0.0 | |
| SECC | 1.0 | Φ16-8R | 1.8 | 260 | 6.1 | 0.0 | 0.0 | 0.0 | OMIT |
| SECC | 1.2 | Φ16-8R | 1.9 | 290 | 6.5 | 0.0 | 0.0 | 0.0 | |
| SECC | 1.6 | Φ16-8R | 2.0 | 350 | 7.3 | 0.0 | 0.0 | 0.0 | |
| SECC | 2.0 | Φ16-8R | 2.1 | 390 | 8.5 | 0.0 | 0.0 | 0.0 | |
| SECC | 2.3 | Φ16-8R | 2.2 | 460 | 9.1 | 0.0 | 0.0 | 0.0 | |
| SGCC | 1.0 | Φ16-8R | 2.0 | 130 | 5.5 | 80.0 | 270.0 | 7.5 | |
| SGCC | 1.2 | Φ16-8R | 2.2 | 130 | 6.0 | 80.0 | 380.0 | 7.8 | |

FIG11 (a)

ENERGIZATION TIME 1 = 250msec
WELDING CURRENT 1 = 6.0kA
COOLING TIME = 0msec
ENERGIZATION TIME 2 = 0msec
WELDING CURRENT 2 = 0kA

WELDING CURRENT 1

INITIAL PRESSURIZATION TIME

HOLDING TIME

SPCC1.0

ENERGIZATION TIME 1

FIG11 (b)

ENERGIZATION TIME 1 = 130msec
WELDING CURRENT 1 = 5.5kA
COOLING TIME = 80msec
ENERGIZATION TIME 2 = 270msec
WELDING CURRENT 2 = 7.5kA

INITIAL PRESSURIZATION TIME

WELDING CURRENT 1

WELDING CURRENT 2

HOLDING TIME

SGCC1.0

ENERGIZATION TIME 1

ENERGIZATION TIME 2

FIG11 (c)

## FIG12

**40** SECOND DATABASE **34**

**52** ADDITIONAL ELEMENT = (PLATING WEIGHT RATIO 90g/m$^2$)

TREND FORMULA

Reference Value OF Plating Weight = 30g/m$^2$

PRESSING FORCE = SELECTED PRESSING FORCE ×
(1 + (WEIGHT RATIO - 1) × COEFFICIENT 1) × CORRECTION RATIO %

WELDING CURRENT 1 = SELECTED WELDING CURRENT 1 ×
(1 + (WEIGHT RATIO - 1) × COEFFICIENT 2) × CORRECTION RATIO %

ENERGIZATION TIME 1 = SELECTED ENERGIZATION TIME 1 ×
(1 + (WEIGHT RATIO - 1) × COEFFICIENT 3) × CORRECTION RATIO %

WELDING CURRENT 2 = SELECTED WELDING CURRENT 2 ×
(1 + (WEIGHT RATIO- 1) × COEFFICIENT 4) × CORRECTION RATIO %

ENERGIZATION TIME 2 = SELECTED ENERGIZATION TIME 2 ×
(1 + (WEIGHT RATIO - 1) × COEFFICIENT 5) × CORRECTION RATIO %

COEFFICIENT 1 = 0.03, COEFFICIENT 2 = 0.03, COEFFICIENT 3 = 0.03,
COEFFICIENT 4 = 0.07, COEFFICIENT 5 = 0.07

## FIG13

**28**

INPUT DEVICE

**32**
BASIC ELEMENT

BASIC ELEMENT

BASIC ELEMENT

ADDITIONAL ELEMENT
.
.
.
**34**
ADDITIONAL ELEMENT

ELEMENT SELECTING DEVICE

**36** FIRST DATABASE **38**

**40** SECOND DATABASE **41**

THIRD DATABASE

**54** ADJUSTING DEVICE

FIG14

41

| ELEMENT | | | | | | TREND FORMULA | INITIAL VALUE OF WELDING CONDITION | | | ADJUSTMENT VALUE OF WELDING CONDITION | | |
|---|---|---|---|---|---|---|---|---|---|---|---|---|
| KIND OF MATERIAL | UPPER PLATE THICKNESS | UPPER ELECTRODE | LOWER PLATE THICKNESS | LOWER ELECTRODE | CORRECTION RATIO | | PRESSING FORCE | ENERGIZATION TIME | WELDING CURRENT | PRESSING FORCE | ENERGIZATION TIME | WELDING CURRENT |
| SPCC | 1.0 | Φ16-8R | --- | --- | --- | --- | --- | --- | --- | 0 | +20 | +0.1 |
| SPCC | 1.2 | Φ16-8R | --- | --- | --- | --- | --- | --- | --- | +0.1 | +10 | 0 |
| SPCC | 1.6 | Φ16-8R | --- | --- | --- | --- | --- | --- | --- | 0 | +20 | −0.1 |
| SPCC | 2.0 | Φ16-8R | --- | --- | --- | --- | --- | --- | --- | +0.1 | −20 | +0.2 |
| ... | ... | ... | ... | ... | ... | --- | ... | ... | ... | ... | ... | ... |
| SPCC | 1.5 | Φ16-8R | --- | --- | 100 | --- | --- | --- | --- | 0 | +10 | +0.2 |
| SPCC | 1.0 | Φ16-8R | 1.6 | Φ16-8R | 100 | --- | --- | --- | --- | +0.3 | +20 | +0.1 |
| SPCC | 1.0 | Φ16-8R | 1.6 | Φ16-8R | 100 | --- | --- | --- | --- | +0.2 | +30 | −0.1 |
| SPCC | 1.0 | Φ16-8R | 2.0 | Φ16-8R | 100 | --- | --- | --- | --- | +0.2 | +30 | +0.3 |
| SPCC | 1.0 | Φ16-8R | 2.0 | Φ16-8R | 100 | --- | --- | --- | --- | +0.3 | +20 | −0.1 |
| ... | ... | ... | ... | ... | ... | --- | ... | ... | ... | ... | ... | ... |

FIG15

68

| OPERATION SCREEN (WELDING CONDITION EDIT SCREEN) ─ ▣ ✕ | | |
|---|---|---|
| ITEM NAME | INITIAL VALUE | SET VALU |
| INITIAL PRESSURIZATION TIME | 500msec | ← |
| WELDING CURRENT 1 | 7.0kA | ← |
| ENERGIZATION TIME 1 | 200msec | 210msec |
| COOLING TIME | 0msec | ← |
| WELDING CURRENT 2 | 0kA | ← |
| ENERGIZATION TIME 2 | 0msec | ← |
| HOLDING TIME | 500msec | ← |
| PRESSING FORCE | 1.5kN | ← |

SET — 70

SAVE — 72

STORAGE DESTINATION ▼ — 74

LEARN — 76

<table>
<tr><td colspan="2" align="center">**INTERNATIONAL SEARCH REPORT**</td><td colspan="2">International application No.<br>PCT/JP2020/025421</td></tr>
</table>

**A. CLASSIFICATION OF SUBJECT MATTER**
Int.Cl. B23K11/24(2006.01)i, B23K11/11(2006.01)i
FI: B23K11/24394, B23K11/11540

According to International Patent Classification (IPC) or to both national classification and IPC

**B. FIELDS SEARCHED**

Minimum documentation searched (classification system followed by classification symbols)
Int.Cl. B23K11/00-11/36

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 9-168867 A (MATSUSHITA ELECTRIC INDUSTRIAL CO., LTD.) 30 June 1997 (1997-06-30), paragraphs [0018]-[0039], fig. 1-5 | 1-9 |
| A | JP 2011-167716 A (DAIHEN CORPORATION) 01 September 2011 (2011-09-01), paragraphs [0015]-[0034], fig. 1-4 | 1-9 |
| A | JP 6-142939 A (OSAKA DENKI CO., LTD.) 24 May 1994 (1994-05-24), paragraphs [0008]-[0016], fig. 1-4 | 1-9 |
| A | JP 64-27785 A (OSAKA DENKI CO., LTD.) 30 January 1989 (1989-01-30), gazette, page 2, lower left column, line 1 to page 6, upper right column, line 9, fig. 1-6 | 1-9 |
| A | JP 2014-180699 A (HONDA MOTOR CO., LTD.) 29 September 2014 (2014-09-29), paragraphs [0018]-[0066], fig. 1-7 | 1-9 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 August 2020 | 08 September 2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

Information on patent family members

International application No.

PCT/JP2020/025421

| | | |
|---|---|---|
| JP 9-168867 A | 30 June 1997 | US 5892197 A specification, column 7, line 3 to column 17, line 5 fig. 1-5 EP 780186 A2 |
| JP 2011-167716 A | 01 September 2011 | (Family: none) |
| JP 6-142939 A | 24 May 1994 | (Family: none) |
| JP 64-27785 A | 30 January 1989 | (Family: none) |
| JP 2014-180699 A | 29 September 2014 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7178566 A
- JP 9029456 A
- JP 11047950 A
- JP 2005128818 A